**Europäisches Patentamt**

**European Patent Office**

**Office européen des brevets**

(19)

(11) Numéro de publication: **0 228 926 B1**

(12) **FASCICULE DE BREVET EUROPEEN**

(45) Date de publication du fascicule du brevet:
**27.12.90**

(51) Int. Cl.⁵: **G06F 15/68**

(21) Numéro de dépôt: **86402511.9**

(22) Date de dépôt: **12.11.86**

(54) Procédé de recherche de paires de lignes courbes parallèles dans une image.

(30) Priorité: **15.11.85 FR 8516939**

(43) Date de publication de la demande:
**15.07.87 Bulletin 87/29**

(45) Mention de la délivrance du brevet:
**27.12.90 Bulletin 90/52**

(84) Etats contractants désignés:
**DE NL**

(56) Documents cités:
**PROCEEDINGS OF THE 5TH INTERNATIONAL CONFERENCE ON PATTERN RECOGNITION, Florida, US, 1-4 décembre 1980, pages 383-385, Institute of Electrical and Electronics Engineers, New York, US; TATSURO FUKUI et al.: "Detection and tracking of blood vessels in cine-angiograms" PAPELERA (CURSO) 1982, 139-152 (publ. 1984) 000 PATTERN RECOGNITION, vol. 15, no. 6, 1982, pages 431-443, Pergamon Press Ltd., New York, US; KOICHIRO AKITA et al.: "A computer method of understanding ocular fundus images" 41EME CONGRES RECONNAISSANCE DES FORMES ET INTELLIGENCE ARTIFICIELLE, Paris, FR, 25-27 janvier 1984, vol. 1, pages 25-27; J. CAMILLERAPP et al.: "Codage du contexte et détection au moyen de règles de réécriture"**

(73) Titulaire: **THOMSON-CGR, 13, square Max-Hymans, F-75015 Paris(FR)**

(72) Inventeur: **Catros, Jean-Yves, THOMSON-CSF SCPI 19, avenue de Messine, F-75008 Paris(FR)**
Inventeur: **Mischler, Denis, THOMSON-CSF SCPI 19, avenue de Messine, F-75008 Paris(FR)**

(74) Mandataire: **Lincot, Georges et al, THOMSON-CSF SCPI, F-92045 PARIS LA DEFENSE CEDEX 67(FR)**

(56) Documents cités: (suite)
**PATTERN RECOGNITION, vol. 15, no. 5, 1982, pages 369-377, Pergamon Press Ltd, New York, US; M. TAVAKOLI et al.: "Edge segment linking based on gray level and geometrical compatibilities"**

## Description

La présente invention concerne un procédé de recherche de paires de lignes courbes parallèles dans une image. Elle s'applique notamment à la reconnaissance des vaisseaux en angiographie numérique mais peut également s'appliquer à l'analyse des vues aériennes pour la reconnaissance des fleuves et des routes.

L'angiographie est un procédé qui permet une analyse visuelle des vaisseaux sanguins. Son principe consiste à radiographier la zone d'observation avant puis après l'injection d'un produit opaque aux rayons X. La différence logarithmique de ces deux images permet, s'il n'y a pas eu mouvement entre les deux prises de vues, d'obtenir une image bien contrastée des zones du réseau vasculaire où le produit a diffusé. Le support de ces images est formé soit par une pellicule photographique soit par une mémoire numérique d'images.

La pellicule photographique est utilisée dans l'angiographie traditionnelle, elle présente l'avantage de fournir des images de grande définition mais a pour inconvénient de demander des temps de manipulation assez longs, liés au traitement du support photographique.

La mémoire numérique d'images est utilisée dans l'angiographie numérique, elle permet, de la façon décrite par exemple dans le document Proceeding of the 5th international conference on pattern recognition, Florida US, 1–4 décembre 1989, pages 383–385, Institute of Electrical and Electronics Engineers, New York, US; TATSURO FUKUI et al intitulé "Detection and tracking of blood vessels in cine-angiograms", d'effectuer une analyse pratiquement en temps réel par détection des contours des vaisseaux. Cependant l'image fournie par ce type de procédé est de moins bonne définition que celle obtenue dans l'angiographie traditionnelle.

Le but de l'invention est de pallier les inconvénients précités.

A cet effet, l'invention a pour objet, un procédé de recherche de paires de lignes courbes parallèles dans une image du type consistant à représenter l'image sous la forme de segments de droite, à former à partir de ces segments des tronçons élémentaires de segments parallèles, à assembler les tronçons élémentaires connexes pour former des vaisseaux ou portions de vaisseaux, caractérisé en ce qu'il consiste pour former des tronçons élémentaires, à sélectionner deux segments pouvant former un tronçon lorsque les valeurs de luminance sont à peu près identiques, lorsque les orientations $\phi_1$, et $\phi_2$ sont égales à $k\pi$ après et lorsqu'ils n'ont pas de point commun, lorsque les projections orthogonales de l'un sur l'autre ne sont pas toutes les deux vides, lorsqu'ils ont un espacement moyen compris entre les valeurs de diamètres minimal et maximal tolérés pour un vaisseau, lorsqu'ils sont disposés de manière en ce que les segments soient l'un à gauche de l'autre, et enfin lorsqu'ils ont une valeur moyenne de luminance inférieure au niveau moyen de luminance qui leur est propre.

Outre le fait que ce procédé donne des bons résultats pour représenter des vaisseaux en angiographie numérique, il a aussi pour avantage qu'il permet une représentation des données sous la forme d'un système d'un type bien connu en informatique sous le nom de système expert, permettant une adaptation aisée aux autres applications potentielles. Dans ce système en effet la représentation des données est faite sur plusieurs niveaux en définissant pour chaque niveau des règles de transformation lui permettant à partir d'une base de faits initiale de passer au niveau qui lui est directement supérieur. Les données de départ sont présentées sous la forme d'une liste de segments définis par leurs coordonnées dans le plan de l'image et par leurs valeurs de luminance moyenne et les règles de transformation assurent l'assemblage des segments pour former des tronçons de vaisseaux élémentaires qui sont eux-mêmes assemblés pour former des tronçons plus longs avec des pontages éventuels.

D'autres caractéristiques et avantages de l'invention apparaîtront ci-après à l'aide de la description qui va suivre faite en regard des dessins annexés dans lesquels :

- la figure 1 représente le principe d'analyse d'une image audiographique selon l'invention,
- la figure 2 est un organigramme illustrant les phases de recherche de portions élémentaires et de constitution de vaisseaux,
- la figure 3 illustre la formation d'un tronçon,
- les figures 4A à 4D illustrent les règles de formation d'un vaisseau ;
- les figures 5A à 5C sont des représentations d'images angiographiques obtenues l'une, 5A, par procédé photographique, les autres, 5B et 5C, par le procédé selon l'invention.

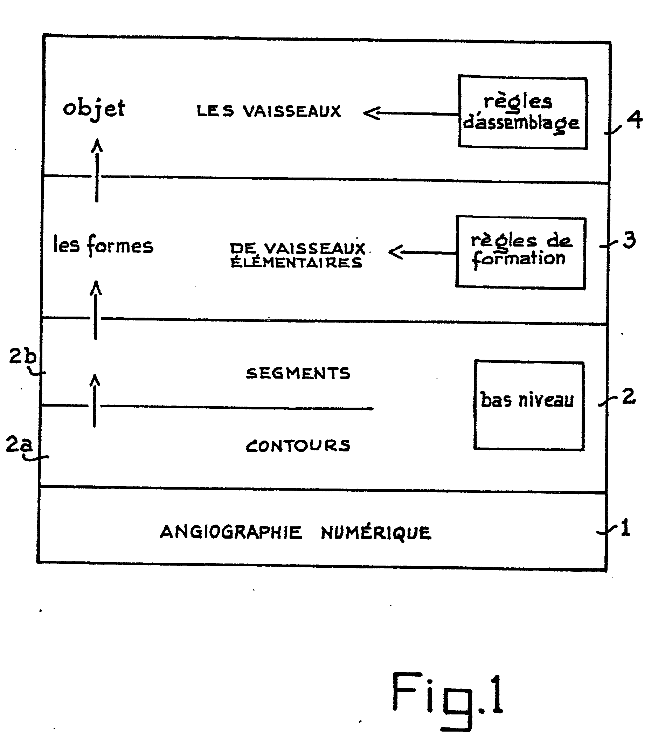

Pour permettre de retrouver les principaux vaisseaux contenus dans une image angiographique numérique le procédé selon l'invention distingue dans l'analyse de l'image plusieurs niveaux de représentation en respectant une structure hiérarchique du type de celle qui est représentée par le tableau de la figure 1. Dans ce tableau, quatre niveaux hiérarchiques sont représentés, le niveau 1 correspond à l'acquisition des données relatives à l'image angiographique issue par exemple d'un appareil d'angiographie numérique, du type connu par exemple sous la désignation DIVAS et fabriqué par la Compagnie de droit français CGR filiale de la société THOMSON-CSF, qui permet d'obtenir une définition d'image de 512 par 512 points, chaque point étant codé numériquement sur une longueur de huit bits. Le niveau 2 met en œuvre des procédures dites de bas niveaux bien connues en imagerie numérique qui permettent de transformer l'image à deux dimensions en un ensemble de segments délimitant les contours qui caractérisent l'image. Le niveau 3 élabore les tronçons de vaisseaux élémentaires à l'aide de règles de formation qui seront énoncées ci-après et le niveau 4 élabore à partir des tronçons obtenus du niveau 3 les vaisseaux à l'aide de règles d'assemblage de différents tronçons obtenus au niveau 3.

Les données nécessaires au traitement de l'image sont rassemblées au niveau 2 dans une base de faits initiale sous la forme d'une liste de coordonnées délimitant des segments orientés par leurs points d'origine et de fin. L'orientation des segments est telle que la zone de plus faible luminance est à gauche. A chacun des segments est attaché une liste de propriétés définissant :

1) un niveau moyen de luminance $Y_i$,

2) une étiquette E commune à tous les segments qui forment une zone contour connexe ,

3) l'orientation $\theta_i$ de chaque segment, dans le plan définie à $2 k\pi$ près,

4) des coefficients $(a_i , b_i)$ qui définissent la droite support du segment,

5) la longueur $L_i$ .

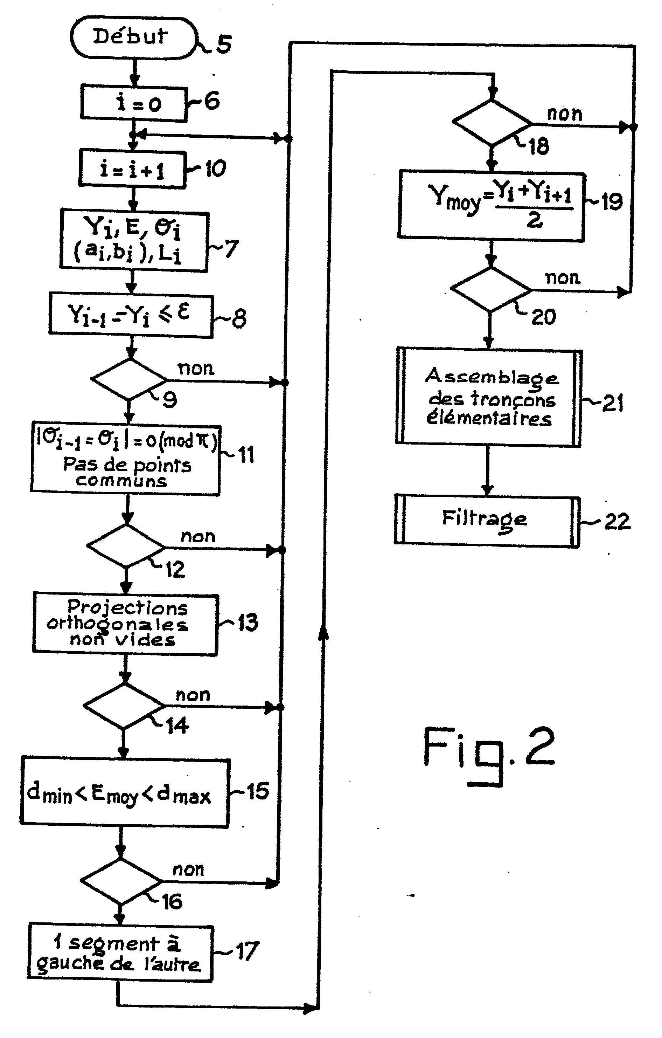

La reconnaissance d'un vaisseau débute par la reconnaissance des tronçons élémentaires qui est exécutée au niveau 3. Cette reconnaissance s'effectue suivant les étapes 5 à 19 de l'organigramme de la figure 2 qui permet de reconnaître l'appartenance de deux segments à un même tronçon. Sur cet organigramme, les données relatives à chaque segment $(Y_i , E, \theta_i , (a_i , b_i)$ et $L_i)$ qui sont rassemblées aux étapes 6 et 7 sont comparées aux étapes 8 à 19 suivantes aux valeurs correspondantes des segments voisins pour définir si l'ensemble des deux segments sur lesquels s'effectue ces comparaisons font partie d'un tronçon commun ou d'une portion élémentaire de vaisseau. Ces tests permettent de vérifier que si deux segments ont :

1) des valeurs de luminance $Y_{i-1}$ et $Y_i$ identiques à $\varepsilon$ près (test des étapes 8 et 9)

2) des orientations $\theta_{i-1}$ et $\theta_i$ telles que $|\theta_{i-1} - \theta_i| = 0 \bmod \pi$ sans avoir de point commun (test des étapes 11 et 12)

4) des projections orthogonales de l'un sur l'autre dont l'une au moins n'est pas vide (étapes 13 et 14)

5) un espacement moyen, défini par la moyenne des distances des projections des extrémités de l'un sur l'autre, compris entre les valeurs "diamètre minimal" $d_{min}$ et "diamètre maximal" $d_{max}$ (étapes 15 et 16).

6) une disposition de manière à ce que les segments soient l'un à la gauche de l'autre (étapes 17 et 18) et,

7) une valeur moyenne de luminance sur un segment virtuel équidistant des deux segments considérés inférieur au niveau moyen de luminance qui leur est propre, pour éviter des fausses associations impliquant des vaisseaux réels mais qui seraient parallèles et assez proches,

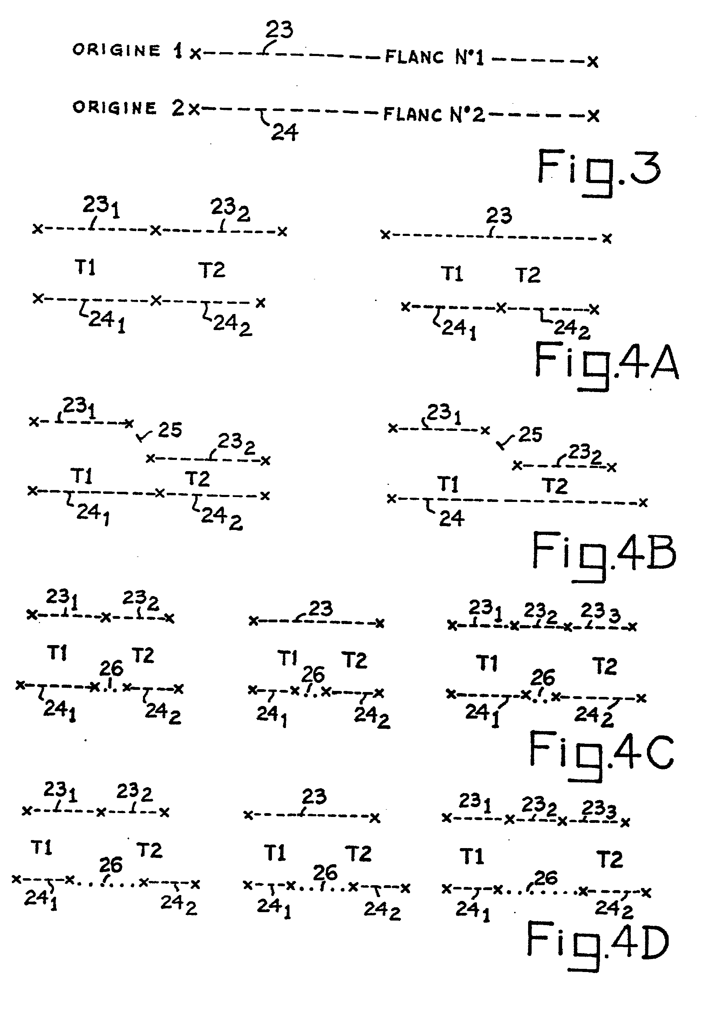

- alors ils forment un tronçon élémentaire de vaisseau défini de la manière indiquée à la figure 3 par un flanc 1 désigné par 23 et un flanc 2 désigné par 24 délimités par des coordonnées d'origine et de fin, origine 1 fin 1 pour le flanc n° 1 et origine 2 et fin 2 pour le flanc n° 2, avec un attribut de diamètre moyen qui est égal à la distance moyenne de projections orthogonales des extrémités de l'un sur l'autre.

Le procédé continue aux étapes 21 et 22 de la figure 2 par l'assemblage des tronçons élémentaires, effectué à l'étape 21 et par un filtrage effectué à l'étape 22. L'assemblage des tronçons élémentaires de l'étape 21 est effectué en respectant les quatre règles suivantes qui sont illustrées à l'aide des figures 4A à 4D.

La règle n° 1, qui est illustrée à la figure 4A énonce le fait que si deux formes élémentaires ou deux portions de vaisseau, $T_1 , T_2$ , sont dans le prolongement direct l'une de l'autre en raison de la connexité de leurs flancs $23_1 , 23_2$ et $24_1 , 24_2$ pris deux à deux, alors, elles forment un vaisseau ou une portion de vaisseau.

La règle n° 2, qui est illustrée à la figure 4B énonce le fait que si deux formes élémentaires ou deux portions de vaisseau, $T_1 , T_2$ , peuvent être mises dans le prolongement l'une de l'autre en raison de la connexité de deux leurs flancs $(24_1 , 24_2)$ et par la présence d'un (ou n avec n restant petit) segment 25 qui relie les deux flancs $(23_1 , 23_2)$ non directement connexes alors elles forment un vaisseau ou une portion de vaisseau.

La règle n° 3 qui est illustrée à la figure 4C énonce le fait que si deux formes élémentaires ou deux portions de vaisseau, $T_1 , T_2$ , peuvent être mises dans le prolongement l'une de l'autre soit en raison de la connexité de deux des flancs $23_1 , 23_2$ , soit en raison de la présence d'un (ou n, avec n restant petit) segment reliant deux flancs $(24_1 , 24_2)$ non directement connexes, et à condition de rajouter un segment court 26 qui bouche un petit trou et qui sépare les deux autres flancs bien distincts, alors elles forment un vaisseau ou une portion de vaisseau.

La règle n° 4 qui est illustrée à la figure 4D énonce le fait que si deux formes élémentaires ou deux portions de vaisseau peuvent être mises dans le prolongement l'une de l'autre, soit en raison de la connexité de deux des flancs, soit en raison de la présence d'un (ou n, avec n restant petit) segment reliant deux flancs non directement connexes, et à condition de rajouter un segment qui bouche ce qu'on appelle un trou et qui sépare deux autres flancs bien distincts, et si le segment rajouté 26 forme avec des segments $24_1 , 24_2$ , représentatifs de la liaison des autres flancs un tronçon élémentaire alors elles forment un vaisseau ou une portion de vaisseau.

La mise en œuvre de ces règles pourra s'effectuer en programmation par exécution sur une machine de traitement de l'information, type VAX 750 de Digital Equipement par exemple, d'une procédure de test sur la connexité de deux flancs de tronçon, d'une procédure de recherche de chaîne de segments reliant deux flancs par des points extrémités de ces flancs, une procédure de contrôle de diamètre de trou, une procédure pour adjoindre un segment pour boucher un trou pour permettre l'exécution de la règle n° 4, une procédure de création d'un nouveau tronçon résultant de l'association de deux tronçons, une procédure de création de segment nouveau, et une procédure de mise à jour de la base de faits. Ces procédures pourront être écrites en utilisant par exemple le langage connu sous les désignations Lisp (ou NIL du MIT).

La procédure de test de la connexité de deux flancs de tronçon permet d'établir que deux flancs de tronçon sont connexes lorsque

a) l'un des tronçons est inclus dans l'autre au sens où les segments le constituant sont un sous-ensemble de ceux du contenant,

b) il y a une extrémité commune,

c) l'intersection des ensembles de segments constituant est non vide et forme une suite de segments bien connexes incluant un segment d'extrémité de chacun des flancs de manière à respecter le sens de ceux-ci,

d) le flanc résultant assure à l'ensemble des segments qu'il constitue un sens compatible à tous ces segments (deux segments consécutifs allant dans le même sens).

La procédure de recherche d'une chaîne de segments consiste à rechercher dans la liste des segments source une chaîne de n segments reliant deux flancs par des points d'extrémité de ces flancs. Des conditions supplémentaires sur la chaîne des segments de la liaison peuvent être imposées et on peut imposer par exemple qu'il n'y ait pas de demi-tour intempestif c'est-à-dire que deux segments consécutifs doivent toujours avoir un produit scalaire positif ou nul.

La procédure de contrôle de diamètre d'un trou est une procédure qui vérifie les conditions dimensionnelles sur les diamètres des trous. Elle permet de rendre possible l'exécution de la règle n° 3.

La procédure d'adjonction d'un segment pour boucher un trou permet l'exécution de la règle n° 4, à savoir, la formation d'un tronçon élémentaire avec un des segments représentatifs de la connexité de deux flancs et une limitation sur la taille du trou. Les segments représentatifs de la connexité de deux flancs sont constitués soit par les deux segments situés de part et d'autre du point commun aux deux flancs, si les deux flancs ne se touchent que par des points extrémités, soit les segments qui constituent la liaison, si les deux flancs ne se touchent pas directement mais sont reliés par un petit nombre de segments, ou encore sont constitués par les segments formant l'intersection de leurs segments constituant, si les deux flancs ont au moins un de leurs segments d'extrémités commun.

La procédure de création d'un nouveau tronçon conduit à l'association de deux tronçons en effectuant un contrôle de non-chevauchement de ces flancs.

La création de segments nouveaux permet avec accord éventuel des éléments de la structure hiérarchique bas niveau de rechercher s'il est possible d'effectuer des pontages entre deux extrémités de contours. Cette procédure de création de segments nouveaux se termine par la procédure de mise à jour de la base de faits.

La stratégie d'analyse des segments de l'image pour former les vaisseaux consiste à enchaîner les règles définies précédemment de la façon suivante. Cette stratégie commence toujours par l'exécution de la règle de formation des tronçons élémentaires des vaisseaux et est suivie de l'exécution des règles n° 1 à n° 4. Les règles n° 1 et n° 2 sont appliquées à tout couple de portions de vaisseau jusqu'à invariance de la base de faits. La règle n° 3 est appliquée à tout couple de portions de vaisseau suivi de l'exécution de la règle n° 1 jusqu'à invariance de la base de faits. La règle n° 4 est appliquée à tout couple de portion de vaisseau, elle est suivie de l'exécution de la règle n° 1 jusqu'à invariance de la base de faits. Enfin l'exécution de l'ensemble de ces règles est suivie de l'exécution d'une procédure de filtrage qui consiste en une sélection de vaisseau suivant des critères de forme et d'importance. Celle-ci peut être exécutée à l'aide des quatre processus de filtrage suivants :

1) selon une première technique de filtrage les vaisseaux entièrement inclus dans d'autres sont effacés de la base de faits,

2) selon une deuxième technique de filtrage les vaisseaux ayant l'un de leurs flancs inclus dans l'un des flancs d'un autre vaisseau et dont le deuxième flanc est de longueur inférieure à la longueur du second flanc de l'autre vaisseau sont effacés de la base de faits,

3) selon une troisième technique les portions élémentaires de vaisseau ne sont pas conservées au titre de vaisseau

4) et enfin selon une quatrième technique les vaisseaux présentant des défauts de forme du type: disproportion de la longueur des flancs ou ayant un diamètre largement supérieur à la longueur sont effacés de la base de faits.

Les quatre filtres sont successivement appliqués à la base de faits et leur rôle est d'éliminer les vaisseaux parasites ou les faux vaisseaux qui apparaissent au cours du traitement.

Pour réaliser ces filtres, un certain nombre de seuils qui sont déjà apparus dans l'énoncé des règles sont à définir par l'opérateur, mais le choix de leur valeur peut être à terme inclus dans les règles stratégiques de contrôles. Ces seuils peuvent être en particulier définis par les diamètres minimal et maximal des vaisseaux, le diamètre des trous pour permettre l'exécution des règles n° 3 et n° 4, d'autres seuils pouvant avoir éventuellement des valeurs relativement figées pour définir : une tolérance sur l'orientation des segments ou une tolérance sur les écarts de luminance pour permettre l'exécution de la règle n° 1 du niveau forme.

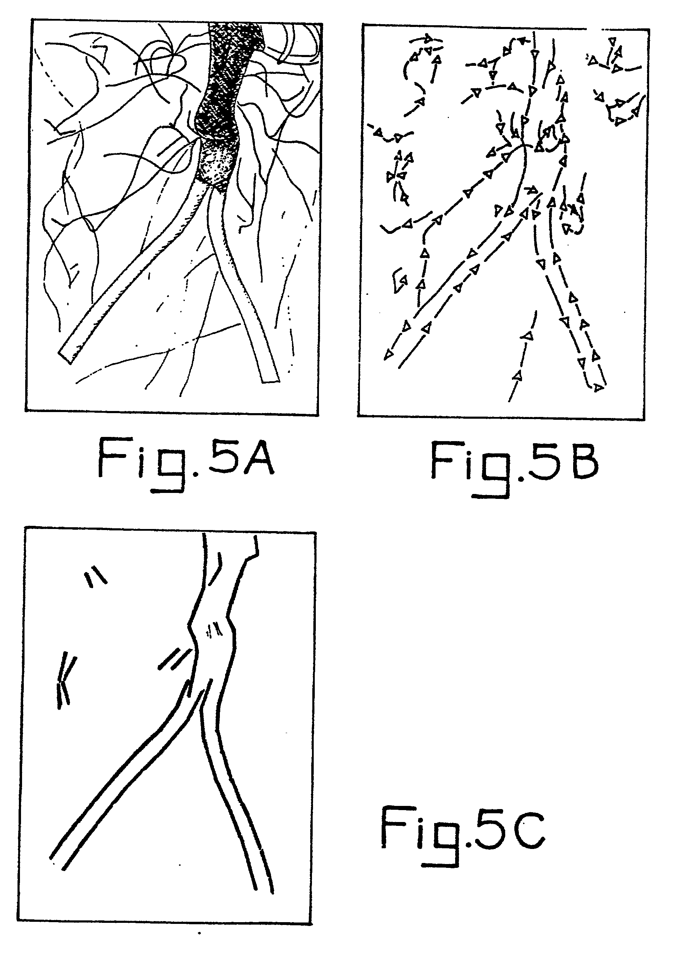

Des résultats obtenus en application du procédé selon l'invention sont figurés aux figures 5A, 5B et 5C où il est possible de comparer le graphisme de vaisseaux obtenus aux figures 5B et 5C avec l'image obtenue d'une photographie des mêmes vaisseaux, au rayon X par une angiographie classique. Ces images ont été fournies par un calculateur VAX 750 programmé suivant le procédé de l'invention dans un langage Lisp.

**Revendications**

1. Procédé de recherche de paires de lignes courbes parallèles dans une image, du type consistant à représenter l'image sous la forme de segments de droite (7), à former à partir de ces segments des tronçons élémentaires de segments parallèles (8, ...20), à assembler les tronçons élémentaires connexes (21) pour former des vaisseaux ou portions de vaisseaux, caractérisé en ce qu'il consiste pour former des tronçons élémentaires, à sélectionner deux segments pouvant former un tronçon lorsque les valeurs de luminance sont à peu près identiques (8), lorsque les orientations $\phi_1$ et $\phi_2$ sont égales à $k\pi$ près et lorsqu'ils n'ont pas de point commun (11), lorsque les projections orthogonales de l'un sur l'autre (13) ne sont pas toutes les deux vides, lorsqu'ils ont un espacement moyen (15) compris entre les valeurs de diamètres minimal et maximal tolérés pour un vaisseau, lorsqu'ils sont disposés de manière en ce que les segments soient l'un à gauche de l'autre (17), et enfin lorsqu'ils ont une valeur moyenne de luminance (19) inférieure au niveau moyen de luminance qui leur est propre.

2. Procédé selon la revendication 1, caractérisé en ce qu'il consiste à filtrer les vaisseaux (22) ainsi formés pour éliminer les vaisseaux parasites.

3. Procédé selon l'une quelconque des revendications 1 et 2, caractérisé en ce qu'il consiste à assembler les tronçons élémentaires ou les portions de vaisseau pour former un vaisseau ou une portion de vaisseau lorsqu'ils sont dans le prolongement direct les uns des autres en raison de la connexité de leurs flancs ($23_1$, $23_2$; $24_1$, $24_2$).

4. Procédé selon l'une quelconque des revendications 1 à 3, caractérisé en ce qu'il consiste à assembler les tronçons élémentaires ou les portions de vaisseau pour former un vaisseau ou une portion de vaisseau lorsqu'ils peuvent être mis dans le prolongement l'un de l'autre en raison de la connexité de deux de leurs flancs ($23_1$, $23_2$; $24_1$, $24_2$) et par la présence d'un segment (25) qui relie les deux flancs non directement connexes.

5. Procédé selon l'une quelconque des revendications 1 à 4, caractérisé en ce qu'il consiste à assembler les tronçons élémentaires ou les portions de vaisseau pour former un vaisseau ou une portion de vaisseau lorsqu'ils peuvent être mis dans le prolongement l'un de l'autre, soit en raison de la connexité de deux des flancs ($23_1$, $23_2$; $24_1$, $24_2$) soit en raison de la présence d'un segment reliant deux flancs non directement connexes et à condition de rajouter un segment court (26) pour boucher un petit trou et qui sépare les deux autres flancs bien distincts.

6. Procédé selon l'une quelconque des revendications 1 à 5, caractérisé en ce qu'il consiste à assembler les tronçons élémentaires ou les portions de vaisseau pour former un vaisseau ou une portion de vaisseau lorsqu'ils peuvent être mis dans le prolongement l'un de l'autre soit en raison de la connexité de deux des flancs ($23_1$, $23_2$, $24_1$, $24_2$), soit en raison de la présence d'un segment reliant deux flancs non directement connexes et à condition de rajouter un segment (26) qui bouche un trou et qui sépare les deux autres flancs bien distincts et si le segment rajouté forme avec un des segments représentatifs de la liaison des deux autres flancs un tronçon élémentaire.

7. Procédé selon l'une quelconque des revendications 1 à 6, caractérisé en ce que le filtrage consiste à éliminer les vaisseaux entièrement inclus dans d'autres.

8. Procédé selon l'une quelconque des revendications 1 à 7, caractérisé en ce que le filtrage consiste à éliminer les vaisseaux ayant l'un de leurs flancs inclus dans l'un des flancs d'un autre vaisseau et dont le deuxième flanc est de longueur inférieure à la longueur du second flanc de l'autre vaisseau.

9. Procédé selon l'une quelconque des revendications 1 à 8, caractérisé en ce qu'il consiste à filtrer les portions élémentaires de vaisseau.

10. Procédé selon l'une quelconque des revendications 1 à 9, caractérisé en ce qu'il consiste à effacer les vaisseaux présentant des défauts de forme.

**Claims**

1. A method for searching for pairs of curved parallel lines in an image, of the type consisting of representing the image in the form of straight segments (7), of forming from such lines elementary stumps of parallel segments (8, ..20), of assembling the joined elementary stumps (21) in order to form vessels or portions thereof, characterized in that for forming elementary stumps, the method consists of selecting two segments able to form a stump when the luminance valves are more or less identical (8), when the orientations $\theta_1$ and $\theta_2$ are approximately equal to $k\pi$ and when they do not have any point (11) in common, when the orthogonal projections of the one onto the other (13) are not both vacant, when they have a mean distance apart (15) comprised between the minimum and maximum values tolerated for a vessel, when they are placed in such a manner that the segments are to the left of the other one (17), and lastly when they have a mean luminance value (19) less than the respective inherent mean level of luminance.

2. The method as claimed in claim 1, characterized in that it consists of filtering the vessels (22) so formed in order to eliminate the interfering vessels.

3. The method as claimed in claim 1 or in claim 2, characterized in that in consists of assembling the elementary stumps or the portions of vessels in order to form a vessel or a portion thereof when they are in a direct mutual prolongation by reason of the connection of the sides ($23_1$, $23_2$; $24_1$ and $24_2$).

4. The method as claimed in any one of the preceding claims 1 through 3, characterized in that it consists of assembling the elementary stumps or the portions of vessels in order to form a vessel or a portion thereof when they are able to be placed on a mutual prolongation by reason of the connection of their sides ($23_1$, $23_2$; $24_1$ and $24_2$) and the presence of a segment (25) when connects the two sides which are not directly joined.

5. The method as claimed in any one of the preceding claims 1 through 4, characterized in that it consists of assembling the elementary stumps or the portions of vessels in order to form a vessel or a portion thereof when they are able to be placed in mutual prolongation by reason of the connection of two of the sides ($23_1$, $23_2$; $24_1$ and $24_2$) or by reason of the presence of a segment connecting with two sides which are not directly connected and subject to the condition of adding a short segment (26) in order to plug a small hole and which separates the two other fully distinct sides.

6. The method as claimed in any one of the preceding claims 1 through 5, characterized in that it consists of assembling the elementary stumps or the portions of vessel in order to form a vessel or a portion thereof when they are able to be placed in the mutual prolongation either by reason of the connection of two sides (23₁, 23₂, 24₁ and 24₂) or by reason of the presence of a segment connecting the two sides, which are not directly connected together, and subject to the condition of adding a segment (26) which plugs a hole and which separates two other quite distinct sides and if the added segment forms, with one of the segments representing the connection of the two other sides, an elementary stump.

7. The method as claimed in any one of the preceding claims 1 through 6, characterized in that the filtering consists of eliminating the vessels entirely included in other vessels.

8. The method as claimed in any one of the preceding claims 1 through 7, characterized in that the filtering consists in eliminating vessels having one of their sides included in one of the sides of another vessel and whose second side has a length less than the length of the second side of the other vessel.

9. The method as claimed in any one of the preceding claims 1 through 8, characterized in that it consists of filtering the elementary vessel portions.

10. The method as claimed in any one of the preceding claims 1 through 9, characterized in that it consists of removing the vessels which have a form defect.

**Patentansprüche**

1. Verfahren zum Aufsuchen von Paaren von gekrümmten, parallelen Linien in einem Bild eines Typs, bei dem das Bild in Form von Geradensegmenten (7) dargestellt wird, bei dem aus diesen Segmenten parallele Elementarteilstücke (8, ..., 20) gebildet werden und die zusammengehörigen Elementarteilstücke (21) zusammengesetzt werden, um Gefäße oder Teile von Gefäßen zu bilden, dadurch gekennzeichnet, daß es zur Bildung von Elementarteilstücken einen Auswahlschritt umfaßt, in dem zwei Segmente, die ein Teilstück bilden können, ausgewählt werden, wenn die Leuchtdichtewerte im wesentlichen identisch sind (8), wenn die Orientierungen $\theta_1$ und $\theta_2$ im wesentlichen gleich $k\pi$ sind und wenn sie keinen gemeinsamen Punkt besitzen (11), wenn die Orthogonalprojektionen aufeinander (13) nicht beide Null ergeben, wenn sie einen mittleren Abstand besitzen (15), der zwischen den Werten der für ein Gefäß erlaubten minimalen bzw. maximalen Durchmesser liegen, wenn sie so angeordnet sind, daß sich die einen Segmente links von den anderen Segmenten (17) befinden, und wenn sie schließlich einen mittleren Leuchtdichtewert (19) besitzen, der niedriger als das ihnen eigentümliche mittlere Leuchtdichtenniveau ist.

2. Verfahren gemäß Anspruch 1, dadurch gekennzeichnet, daß es eine Filterung der so gebildeten Gefäße (22) aufweist, um störende Gefäße zu beseitigen.

3. Verfahren gemäß einem der Ansprüche 1 und 2, dadurch gekennzeichnet, daß es die Zusammensetzung von Elementarteilstücken oder von Gefäßteilen aufweist, um ein Gefäß oder einen Teil des Gefäßes zu bilden, wenn sie sich aufgrund der Verbundenheit ihrer Seiten (23₁, 23₂: 24₁, 24₂) in direkter gegenseitiger Verlängerung befinden.

4. Verfahren gemäß einem der Ansprüche 1 bis 3, dadurch gekennzeichnet, daß es die Zusammensetzung von Elementarteilstücken oder von Teilen eines Gefäßes aufweist, um ein Gefäß oder einen Teil eines Gefäßes zu bilden, wenn sie aufgrund der Verbundenheit zweier ihrer Seiten (23₁, 23₂; 24₁, 24₂) und aufgrund des Vorliegens eines die zwei nicht direkt verbundene Seiten verbindenden Segmentes (25) in eine gegenseitige Verlängerung gebracht werden können.

5. Verfahren gemäß einem der Ansprüche 1 bis 4, dadurch gekennzeichnet, daß es die Zusammensetzung von Elementarteilstücken oder von Teilen eines Gefäßes aufweist, um ein Gefäß oder einen Teil des Gefäßes zu bilden, wenn sie entweder aufgrund der Verbundenheit zweier ihrer Seiten (23₁, 23₂, 24₁, 24₂) oder aufgrund des Vorliegens eines zwei nicht direkt verbundene Seiten verbindenden Segmentes und unter der Bedingung, daß ein kurzes Segment (26) zum Schließen eines die zwei anderen, wohlunterschiedenen Seiten trennenden kleinen Lochs hinzugefügt wird, in eine gegenseitige Verlängerung gebracht werden können.

6. Verfahren gemäß einem der Ansprüche 1 bis 5, dadurch gekennzeichnet, daß es die Zusammensetzung von Elementarteilstücken oder von Gefäßteilen aufweist, um ein Gefäß oder einen Teil des Gefäßes zu bilden, wenn sie entweder aufgrund der Verbindung zweier Seiten (23₁, 23₂, 24₁, 24₂) oder aufgrund des Vorliegens eines zwei nicht direkt verbundene Seiten verbindenden Segmentes und unter der Bedingung, daß ein Segment (26), das ein die zwei anderen wohlunterschiedenen Seiten trennendes Loch schließt, hinzugefügt wird und das hinzugefügte Segment mit den die Verbindung der zwei anderen Seiten darstellenden Segmenten ein Elementarteilstück bildet, in eine gegenseitige Verlängerung gebracht werden können.

7. Verfahren gemäß einem der Ansprüche 1 bis 6, dadurch gekennzeichnet, daß die Filterung die Beseitigung von Gefäßen, die vollständig in anderen Gefäßen enthalten sind, aufweist.

8. Verfahren gemäß einem der Ansprüche 1 bis 7, dadurch gekennzeichnet, daß die Filterung die Beseitigung von Gefäßen umfaßt, deren eine Seite in einer Seite eines anderen Gefäßes enthalten ist und deren zweite Seite eine Länge besitzt, die kleiner als die Länge der zweiten Seite des anderen Gefäßes ist.

9. Verfahren gemäß einem der Ansprüche 1 bis 8, dadurch gekennzeichnet, daß es das Filtern von Elementarteilen des Gefäßes aufweist.

10. Verfahren gemäß einem der Ansprüche 1 bis 9, dadurch gekennzeichnet, daß es die Löschung von Formfehler aufweisenden Gefäßen umfaßt.

**objet**    LES VAISSEAUX   ←   règles d'assemblage    4

**les formes**    DE VAISSEAUX ÉLÉMENTAIRES   ←   règles de formation    3

2b

SEGMENTS

bas niveau    2

2a

CONTOURS

ANGIOGRAPHIE NUMÉRIQUE    1

Fig.1

EP 0 228 926 B1

Fig.2

EP 0 228 926 B1

Fig.3

Fig.4A

Fig.4B

Fig.4C

Fig.4D

Fig.5A

Fig.5B

Fig.5C